# EUROPEAN PATENT APPLICATION

(11) **EP 3 299 982 A1**
(43) Date of publication of application: **28.03.2018**
(21) Application number: 16002340.4
(22) Date of filing: 03.11.2016
(51) Int. Cl.: G06F 21/34, G06F 13/38, G06F 9/44, H04L 9/08, H04L 9/32, H04L 29/06, H04L 29/08

(54) **METHOD OF COMMUNICATION OF A CRYPTOGRAPHIC APPARATUS WITH A COMPUTING DEVICE, AND CRYPTOGRAPHIC APPARATUS**

(30) Priority: 26.09.2016 PL 41886416
(71) Applicant: Comarch Spolka Akcyjna, 31-864 Krakow (PL)
(72) Inventor: Jarzecki, Arkadiusz, 31-864 Kraków (PL); Nowacki, Mariusz, 31-864 Kraków (PL)

(57) **Abstract**

The subject of the invention is a method of communication of the cryptographic apparatus (1) with a computing device (2), where the cryptographic device (1) is a network device with a web interface and a server which is accessible directly through a web browser (4) at a defined DNS address. To enable communication of the cryptographic apparatus (1) with a web browser (4) the CORS mechanism is applied. Whereas to enable communication of the cryptographic device (1) with an operating system of the computing device (2) the RNDIS driver is applied.

The subject of the invention is also the cryptographic apparatus (1) equipped with a cryptographic chip (20), a microcontroller (10) and a USB interface. It is a network device with a sever, wherein the cryptographic apparatus (1) contains a module with the RNDIS driver and supports the CORS mechanism.

## Description

The subject of the invention is a method of communication of the cryptographic apparatus with a computing device, and cryptographic apparatus, which is used for securing transmitted data, especially data related to bank transactions.

In the existing solutions cryptographic apparatuses connected to a computer via USB interface are recognized as a cryptographic cards. To get access to these cryptographic cards from the level of the web browse installation of an additional software and plug-ins for web browsers and operating systems is required. The user needs to install drivers, middleware and other components on his/her computer and a web browser to communicate with a web-based application. Therefore, the use of this type of cryptographic apparatus is cumbersome for users. What is more, in the currently used versions of web browsers the ability to install various plug-ins, including e.g. plug-ins enabling communication of a web browser with devices over the USB interface, is very limited.

From the European patent application EP 2339493 an authentication device is known. The device is identified by the computer as a native human interface device. The invention relates also to a method to have a computer recognize an authentication device. The device can be identified by a computer as a computer mouse or a keyboard. It contains a button which, when pressed causes transmission of data to a computer.

In the US patent US 7509487 a solution describing a secure communication between a device and network nodes over a network is disclosed. The remote network nodes communicate with the device using unmodified network clients and servers. During execution on the device, a communication module implements one or more link layer communication protocols, operable to communicate with a host computer, with remote network nodes and operable to implement network security protocols thereby setting a security boundary inside the device.

The objective of the invention is to a provide solution concerning a cryptographic apparatus and a method of its communication, which will be able to communicate with a computing device equipped with any commonly used operating system and a web browser without the need for additional drivers, plug-ins or other software.

The method of communication of the cryptographic apparatus with a computing device according to the invention is characterized in that the cryptographic apparatus is a network device with a web interface and a server, which is accessible directly through a web browser at the defined DNS address. To enable communication of the cryptographic apparatus with a web browser the CORS mechanism is applied. In turn, to enable communication of the cryptographic device with an operating system of the computing device the RNDIS driver is applied.

Advantageously the communication between the cryptographic apparatus and a web browser is carried out with the use of the Websocket protocol. The Websocket is accessible over TLS protocol. To connect the cryptographic apparatus with the computing device the USB connector is used.

The cryptographic apparatus equipped with a cryptographic chip, a microcontroller and an USB interface, according to the invention is characterized in that it is a network device with a sever. Moreover the cryptographic apparatus contains a module with the RNDIS driver and supports the CORS mechanism.

The main advantage of the solution according to the invention is the ability to connect the cryptographic apparatus to a computer with any commonly used operating system and a web browser, without the need to install any additional drivers, plug-ins or other software on the computing device. Thanks to that the cryptographic apparatus when connected and recognized by the computer, is immediately ready to work.

The embodiment of the subject of the invention is presented on drawings, where fig. 1 presents a scheme of the connection of the cryptographic apparatus with a computing device, fig. 2 presents a block diagram of the logic structure of the cryptographic apparatus, fig. 3 presents a flowchart of the bank transaction performed with the use of the solution that is the subject of the invention.

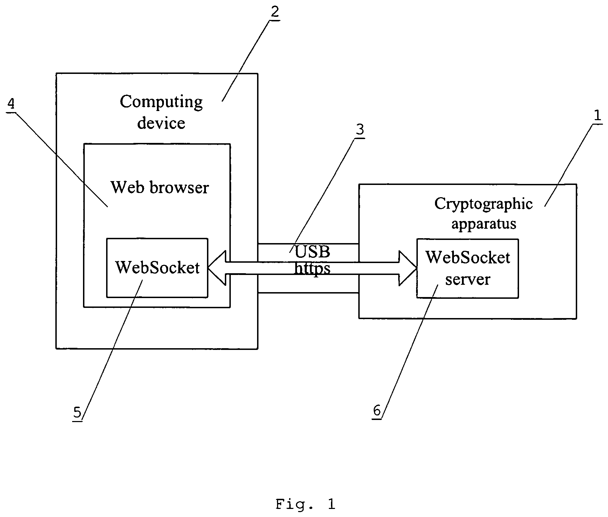

In the embodiment of the invention describing the method of communication of the cryptographic apparatus with a computing device presented in fig. 1 the cryptographic apparatus 1 is connected to the computing device 2. These devices are connected to each other over a USB connector 3. The computing device 2 can be a PC, laptop or tablet equipped with a web browser 4 with implemented Websocket 5. The cryptographic apparatus 1 is a token to authorize bank transfers. It is equipped with keys based on elliptic curve cryptography - ECC, which enables a higher security level and works faster than RSA cryptography. The apparatus 1 is equipped with a built-in button, which needs to pressed and released to confirm the transaction. It is also equipped with a USB 2.0 interface of 12 Mb/s speed. According to the invention, the cryptographic apparatus 1 is a network device with its own MAC and IP addresses and a web interface. The cryptographic apparatus 1 with a computing device 2, to which it is connected, constitute a local area network consisting of two nodes. The client is a web browser 4 on the computing device 2, whereas the server is the cryptographic apparatus 1. The transmission medium for nodes of the network is the USB interface. The server on the cryptographic apparatus 1 provides cryptographic services.

The cryptographic apparatus 1 is accessible for users through a web browser, without the need to install any additional drivers, plug-ins or other software on the computing device 2. The connection of the cryptographic apparatus 1 with the operating system running on any computing device 2, without the need for special drivers or software is obtained through the installation of the RNDIS driver (Remote Network Driver Interface Specification) on the cryptographic apparatus. The RNDIS protocol provides a virtual connection, in the Ethernet standard with operating systems of the computing devices. In turn, to enable communication of the cryptographic apparatus 1 with the web browser 4 the CORS (Cross-origin resource sharing) mechanism is used. The CORS mechanism - cross-origin resource sharing, is a mechanism for handling the requests from a website to a server which is not in the same domain as the source website.

The communication between the cryptographic apparatus 1 and the web browser 4 is carried out with the use of WebSockets. The cryptographic apparatus 1 sets up a WebSocket server 6. And the web browser 4 as it was stated above has implemented WebSocket 5. The cryptographic apparatus 1 is accessible to the user over the web browser 4 at an appointed DNS address, over the https protocol as a WebSocket. Thanks to the WebSocket protocol a full-duplex data transmission between the web browser and server over a single TCP connection is possible.

In order to establish a connection between the cryptographic apparatus 1 and the web browser 4, the apparatus sets a TCP/IP stack along with network services. Thanks to that, the web browser 4 discovers the cryptographic apparatus 1.

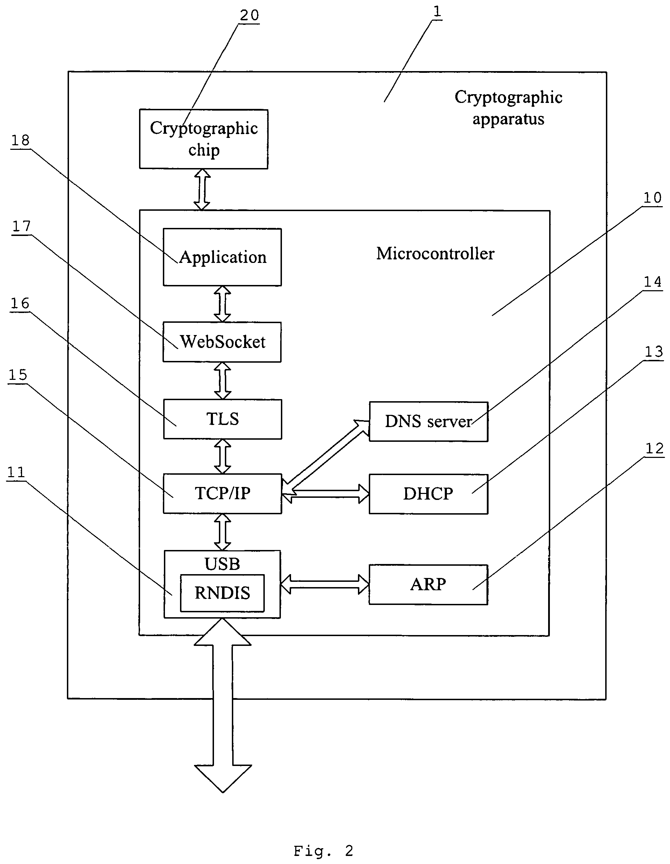

According to the block diagram shown in Fig. 2 the cryptographic apparatus comprises a microcontroller 10 and a cryptographic chip 20. The cryptographic chip 20 is an element that stores the private ECC keys belonging to the cryptographic apparatus 1 user and the ECC key of the cryptographic TLC protocol. The cryptographic chip 20 is also responsible for executing operations with the use of ECC keys. In turn, the microcontroller 10 is responsible for communication of the cryptographic apparatus 1 with other devices e.g. the computing device 2 and with the web browser 4 which is running on the computing device. In order to perform this task the microcontroller 10 has following modules: an USB/RNDIS module 11 supporting the USB protocol and the RNDIS protocol, an ARP module 12 supporting the ARP network protocol, a DHCP module 13 supporting the DHCP communication protocol, a server DNS module 14 supporting the DNS server, a TCP/IP module 15 supporting the TCP/IP stack, a TLS module 16 supporting the TLS cryptographic protocol, a WebSocket module 17 supporting the server and the WebSocket protocol. Moreover, the microcontroller 10 contains an Application module 18. The application is responsible for providing the functionality of electronic data signature using the ECC key. Data encapsulated in USB packets and received by the cryptographic apparatus 1, are sent to the USB/RNDIS module 11. Received by the encryption device 1 data encapsulated in USB packets are accepted by the USB/RNDIS module, from where they are forwarded to the ARP module 12 or the TCP/IP module 15. From TCP/IP module 15 these data reach the DNS server module 14 or DHCP module 13 or TLS module 16. After that, from the TLS module 16 they reach the WebSocket module 17 and in the end they get to the Application module 18.

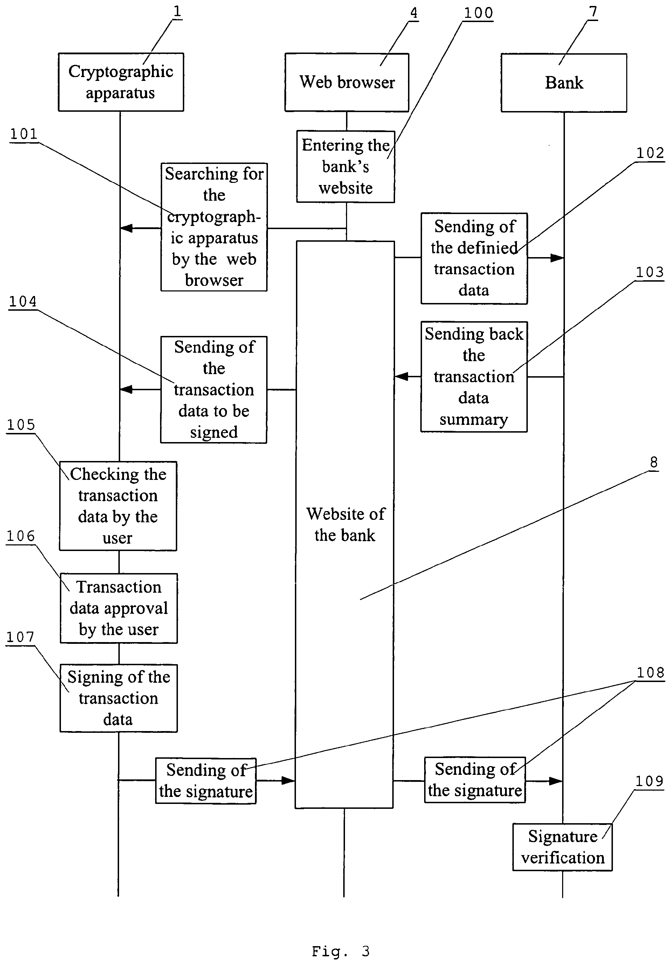

The embodiment of the invention usage in securing a bank transaction is shown in Fig. 3. The cryptographic apparatus 1 is connected to the computing device 2 with the web browser 4. In the first step the user enters the bank's website 100. The web browser 4 searches for the cryptographic apparatus 101 on the basis of the address provided by the apparatus and establishes the connection. On the bank's website 8, which is a single page application, the user enters the transaction data. Next, the defined transaction data are sent 102 to the bank. The bank 7 sends back the transaction data summary 103 to the user and displays it on the bank's website 8. Afterwords the transaction data are sent to be signed 104 to the cryptographic apparatus. These data are transmitted between the web browser 2 and the cryptographic apparatus 1 with the use of WebSocktes. Next, the user checks the transaction data 105. If the cryptographic apparatus 1 is equipped with a display, the verification can by carried out on the apparatus. If the cryptographic apparatus 1 has no display screen, the transaction data verification is carried out on the computing device to which this apparatus is connected. Next, the user approves the transaction data 106. The approval is carried out by physically pressing and releasing of a button which is built-in into the cryptographic apparatus 1. The transaction data approval by the user signs the transaction data 107 by the cryptographic apparatus 1. Next, the signature is send 108 to the bank 7, which verifies the signature 109.

## Claims

1. The method of communication of the cryptographic apparatus with a computing device **characterized in that** the cryptographic apparatus (1) is a network device with a web interface and a server, which is accessible directly through a web browser (4) at the defined DNS address, wherein to enable communication of the cryptographic apparatus (1) with a web browser (4) the CORS mechanism is applied, and to enable communication of the cryptographic device (1) with an operating system of the computing device (2) the RNDIS driver is applied.

2. The method according to claim 1 **characterized in that** the communication between the cryptographic apparatus (1) and web browser (4) is carried out with the use of the Websocket protocol.

3. The method according to claim 2 **characterized in that** the Websocket is accessible over TLS protocol.

4. The method according to claim 1 **characterized in that** to connect the cryptographic apparatus (1) with the computing device (2) the USB connector (3) is used.

5. The cryptographic apparatus equipped with a cryptographic chip, a microcontroller and a USB interface **characterized in that** it is a network device with a sever, wherein the cryptographic apparatus (1) contains a module with the RNDIS driver and supports the CORS mechanism.
